# EUROPEAN PATENT APPLICATION

(11) **EP 1 267 556 A2**
(43) Date of publication of application: **18.12.2002**
(21) Application number: 02010707.4
(22) Date of filing: 14.05.2002
(51) Int. Cl.: H04M 3/44

(54) **Telecommunications system, apparatus and method for providing an alphanumeric speed dialing service**

(30) Priority: 11.06.2001 US 878480
(71) Applicant: ALCATEL, 75008 Paris (FR)
(72) Inventor: Mani, Babu, V., Plano, TX 75025 (US)
(74) Representative: Dreiss, Fuhlendorf, Steimle & Becker

(57) **Abstract**

A telecommunications system, apparatus and method are described that are capable of providing an alphanumeric speed dialing service. Basically, the apparatus includes a database having a table of stored alphanumeric speed dialing codes (e.g., "MOM, "D", "BILL", "GB", "HOLLY") and stored phone numbers that where provided by a calling party (subscriber). The apparatus also includes a controller that is capable of receiving an alphanumeric speed dialing code (e.g., "MOM") from the calling party and is further capable of comparing the received alphanumeric speed dialing code (e.g., "MOM") to the stored alphanumeric speed dialing codes (e.g., "MOM, "D", "BILL", "GB", "HOLLY") and if there is a match then enabling a connection between the calling party and a called party (e.g., mother of the calling party) at the stored phone number associated with the received alphanumeric speed dialing code (e.g., "MOM"). The apparatus and alphanumeric speed dialing service can be network-based or telephone-based.

## Description

### BACKGROUND OF THE INVENTION

### Field of the Invention

The present invention relates in general to the telecommunications field and, in particular, to a telecommunications system, apparatus and method capable of providing an alphanumeric speed dialing service.

### Description of Related Art

Today in the telecommunications field, a calling party can subscribe to and use a numerical speed calling service to dial frequently called numbers simply by pressing one or two buttons on their phone. However, the traditional numerical speed calling service has a number of drawbacks that make it difficult for calling parties to effectively use such a service. In fact, many calling parties do not use the traditional numerical speed calling service in the first place because of these drawbacks. One problem with the traditional numerical speed calling service is that a calling party must remember which button or buttons they must press in order to call a particular called party. Since the button or buttons (e.g., 1, 2, 12, 24) are just numbers and are non-descriptive of the called parties it is difficult for the calling party to remember which button or series of buttons can be used to call a particular called party. As such, it is common for the calling party trying to call a particular called party to "accidentally" hit the wrong button or buttons on the phone and call another called party.

Another problem with the traditional numerical speed calling service is that the number of called parties that can be called using the service is limited because the service only uses one or two buttons to identify potential called parties. For instance, Southwestern Bell has a numerical speed calling service known as "Speed Calling-8" which lets a calling party dial upto eight frequently called numbers by pressing two buttons. With this service, the calling party can pick up their phone and enter the speed calling code which is one of the numbers 2 through 9 and then press the # key to call a particular called party. Note the numbers 1 and 0 are not speed calling codes because 1 is used to place long-distance calls, and 0 is used to reach an operator. Of course, it would be desirable to have a speed calling service that does not have the aforementioned drawbacks of the traditional numerical speed calling service. These needs and other needs are addressed by the telecommunications system, apparatus and method of the present invention.

### BRIEF DESCRIPTION OF THE INVENTION

The present invention includes a telecommunication system, apparatus and method capable of providing an alphanumeric speed dialing service. Basically, the apparatus includes a database having a table of stored alphanumeric speed dialing codes (e.g., "MOM, "D", "BILL", "GB", "HOLLY") and stored phone numbers that where provided by a calling party (subscriber). The apparatus also includes a controller that is capable of receiving an alphanumeric speed dialing code (e.g., "MOM") from the calling party and is further capable of comparing the received alphanumeric speed dialing code (e.g., "MOM") to the stored alphanumeric speed dialing codes (e.g., "MOM, "D", "BILL", "GB", "HOLLY") and if there is a match then enabling a connection between the calling party and a called party (e.g., mother of the calling party) at the stored phone number associated with the received alphanumeric speed dialing code (e.g., "MOM"). The apparatus and alphanumeric speed dialing service can be network-based or telephone-based.

### BRIEF DESCRIPTION OF THE DRAWINGS

A more complete understanding of the present invention may be had by reference to the following detailed description when taken in conjunction with the accompanying drawings wherein:
FIGURE 1 is a block diagram illustrating the basic components of an apparatus in accordance with the present invention;
FIGURE 2 is a block diagram illustrating a telecommunications system incorporating the apparatus shown in FIGURE 1;
FIGURE 3 is a flowchart illustrating the basic steps of a preferred method for enabling a calling party to use an alphanumeric speed dialing service in accordance with the present invention;
FIGURE 4 is a flowchart illustrating in greater detail the providing operation of step 302 of the preferred method shown in FIGURE 3; and
FIGURE 5 is a flowchart illustrating the basic steps of a preferred method for providing an abbreviated alphanumeric speed dialing service to a calling party in accordance with the present invention.

### DETAILED DESCRIPTION OF THE DRAWINGS

Referring to the drawings, wherein like numerals represent like parts throughout the several views, there are disclosed a preferred embodiment of the present invention including an apparatus 100, telecommunications system 200 and method 300 and 500 that enable a calling party to use an easy to remember alphanumeric speed dialing code to call a called party without dialing the phone number of the called party.

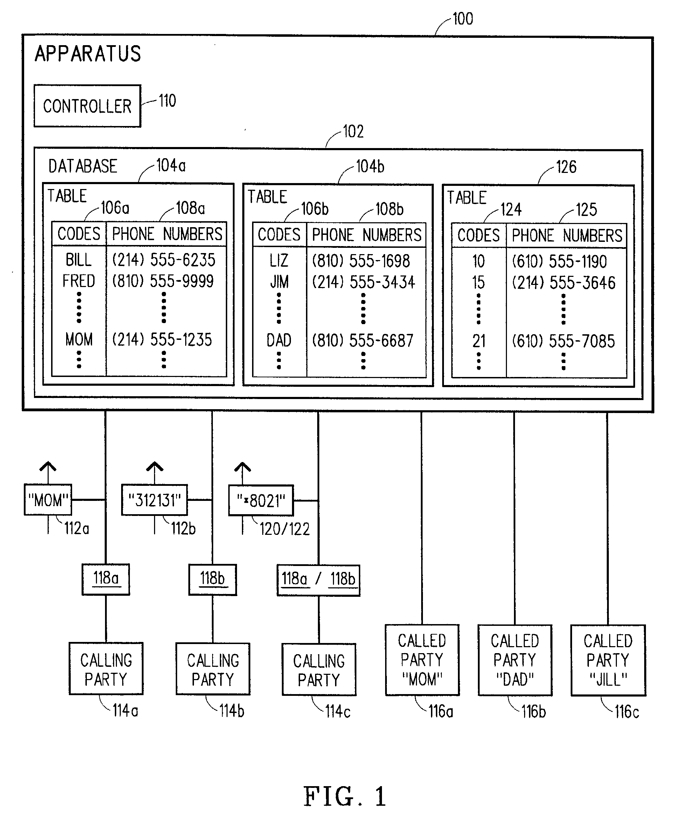

Referring to FIGURE 1, there is a block diagram illustrating the apparatus 100 that is capable of providing an alphanumeric speed dialing service to a calling party (subscriber). The apparatus 100 includes a database 102 having one or more tables 104a and 104b (only two shown) that store alphanumeric speed dialing codes 106a and 106b and their associated phone numbers 108a and 108b. Each table 104a and 104b is respectively created by and associated with a calling party 114a and 114b (only two shown).

The apparatus 100 also includes a controller 110 that is capable of receiving an alphanumeric speed dialing code 112a and 112b from calling party 114a and 114b. The calling party 114a and 114b may use either an alphanumerical phone 118a or a numerical phone 118b to send the alphanumeric speed dialing code 112a and 112b to the controller 110. The controller 110 is further capable of comparing the received alphanumeric speed dialing code 112a and 112b to the stored alphanumeric speed dialing codes 106a and 106b and if there is a match then enabling a connection between the calling party 114a and 114b and a called party 116a and 116b at the phone number 108a and 108b associated with the received alphanumeric speed dialing code 112a and 112b (see examples below).

If there is no match between the received alphanumeric speed dialing code 112a and 112b and the stored alphanumeric speed dialing codes 106a and 106b, then the apparatus 100 can prompt the calling party 114a and 114b to enter a valid speed dialing code and if the speed dialing table 104a and 104b is empty then the calling party 114a and 114b can have the option to populate the speed calling table 104a and 104b. Alternatively if there is no match, the apparatus 100 can inform the calling party 114a and 114b that there is an error and in order to call the called party they should dial the entire number of the called party (assuming the apparatus 100 can distinguish between a speed dialing code and a full destination number). In addition, if there is no match, the apparatus 100 can inform the calling party 114a and 114b that it is possible to add the phone number of that particular called party and a newly created alphanumeric speed dialing code to the table 104a and 104b.

Briefly described below is one example of the capability of the alphanumeric speed dialing service of the present invention, assume calling party 114a uses the alphanumerical phone 118a (wireless device or land-based device) to enter an alphanumeric speed dialing code 112a (e.g., "MOM"). The alphanumeric speed dialing code 112a (e.g., "MOM") is forwarded to and received by the controller 110 which compares the received alphanumeric speed dialing code 112a (e.g., "MOM") to the stored alphanumeric speed dialing codes 106a in table 104a. Assuming there is a match, then a connection is enabled between the calling party 114a and the called party 116a (e.g., the mother of calling party 114a) at the phone number (e.g., 214-555-1235) associated with the received alphanumeric speed dialing code 112a (e.g., "MOM"). The use of the descriptive alphanumeric speed dialing code 112a (e.g., "MOM") to call a particular called party 116a is much easier for the calling party 114a to remember than the non-descriptive one or two digit numerical codes (e.g., 1, 2, 21, 23) used in the traditional numerical speed dialing services.

One way, the controller 110 knows it is the calling party 114a attempting to use the alphanumeric speed dialing service and knows to look at table 104a instead of table 106b because the alphanumeric speed dialing service subscribed to by calling party 114a can associate table 104a with the phone number of the alphanumerical phone 118a. To enable this association, the phone number or identification number of the alphanumerical phone 118a is also forwarded to the controller 110 along with the alphanumeric speed dialing code 112a. In case, the calling party 114a uses another phone (not shown) besides the alphanumerical phone 118a, then the calling party 114a could still access their speed calling table 104a. To accomplish this the calling party 114a may perform the following dialing sequence: (1) dial a remote feature access code; (2) dial a home directory number and enter an assigned password; and (3) dial a feature access code (if necessary) and enter a speed dialing code 106a (as usually done at the home station). This is beneficial if the calling party 114a is traveling or otherwise away from their home and alphanumerical phone 118a and can not recall the phone number of a particular called party.

Described below is another example of the capability of the alphanumeric speed dialing service of the present invention, assume calling party 114b uses the numerical phone 118b (wireless device or land-based device) to enter an alphanumeric speed dialing code 112b (e.g., "312131"). The alphanumeric speed dialing code 112b (e.g., "312131") is forwarded to and received by the controller 110 which translates the numerical characters into alphanumerical characters which together form the alphanumeric speed dialing code 112b (e.g., "DAD") (how this translation occurs is described below in more detail). The controller 110 then compares the translated alphanumeric speed dialing code 112b (e.g., "DAD") to the stored alphanumeric speed dialing codes 106b in table 104b and assuming there is a match then a connection could be established between the calling party 114b and a called party 116b (e.g., the father of calling party 114b) at the phone number (e.g., 810-555-6687) associated with the translated alphanumeric speed dialing code 112b (e.g., "DAD"). Again, the use of the descriptive alphanumeric speed dialing code 112a (e.g., "312131") to call a particular called party 116b is much easier for the calling party 114b to remember than the non-descriptive one or two digit numerical codes (e.g., 1, 2, 21, 23) used in the traditional numerical speed dialing services.

Like in the first example, the controller 110 knows it is the calling party 114b attempting to use the alphanumeric speed dialing service and knows to look at table 104b instead of table 106a because the alphanumeric speed dialing service subscribed to by calling party 114b can associate table 104b with the phone number of the numerical phone 118b. To enable this association, the phone number or other identification number of the alphanumerical phone 118b is also forwarded to the controller 110 along with the alphanumeric speed dialing code 112b. In case, the calling party 114b uses another phone (not shown) besides the numerical phone 118b, then the calling party 114b could still access their speed calling table 104b. To accomplish this the calling party 114b may perform the following dialing sequence: (1) dial a remote feature access code; (2) dial a home directory number and enter an assigned password; and (3) dial a feature access code (if necessary) and enter a speed dialing code 106b (as usually done at the home station). This is beneficial if the calling party 114b is traveling or otherwise away from their home and numerical phone 118b and can not recall the phone number of a particular called party.

The alphanumeric speed dialing service enabled by the apparatus 100 can be considered as an enhancement to the traditional numerical speed dialing service. If this happens, then feature access codes may be used to distinguish between the two speed dialing services. For example, calling party 114a may include a feature access code (e.g., "*69") along with the alphanumeric speed dialing code 112a (e.g., "MOM") that is sent to the controller 110 to initiate the alphanumeric speed dialing service of the present invention. And, calling party 114c may include a different feature access code 120 (e.g., "*80") along with a traditional numerical speed dialing code 122 (e.g., "21") that is sent to the controller 100 to initiate the traditional numerical speed dialing service. Thereafter, in accordance with the traditional numerical speed dialing service, the controller 110 would compare the received numerical speed dialing code 122 (e.g., "21") to stored numerical speed dialing codes 124 in table 126 and if there is a match then a connection between the calling party 114c and a called party 116c (e.g., Jill) at the phone number 125 (e.g., 610-555-7085) associated with the received numerical speed dialing code 122 (e.g., "21"). However, the calling party 114c would have to remember that the non-descriptive numerical code 124 (e.g., "21") is associated with the called party 116c (e.g., Jill).

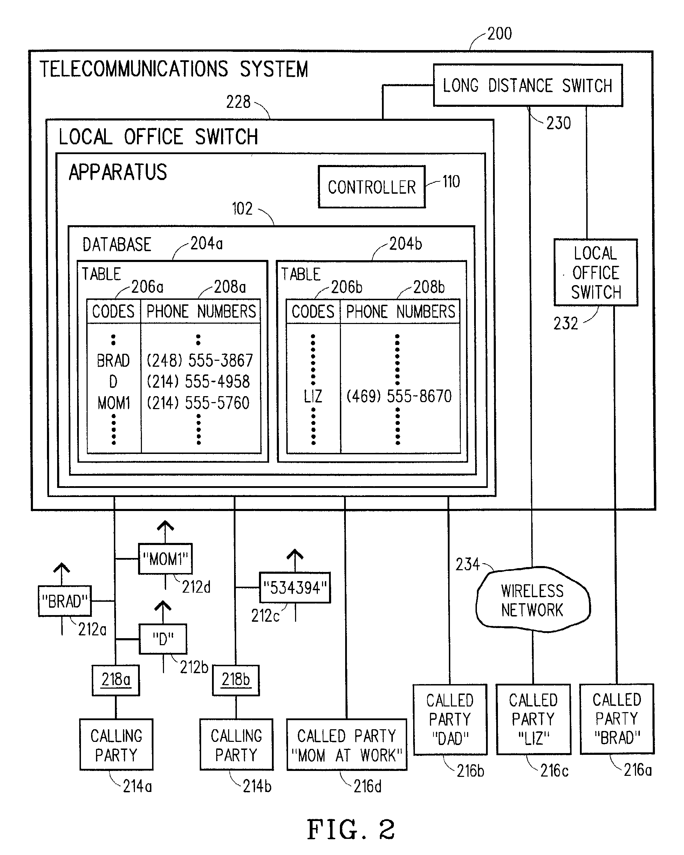

Even if the alphanumeric speed dialing service is not considered an enhancement to the traditional numerical speed dialing service, the apparatus 100 may still require the calling party 114a and 114b to provide a feature access code in addition to the alphanumeric speed dialing code 112a and 112b. The feature access code (e.g., *70) can be an indication to the telecommunications system that the calling party 114a and 114b would like to use the alphanumeric speed dialing service. In the examples below with respect to FIGURE 2, the feature access code is not required by the apparatus 100 or used by the calling party 214a and 214b.

Referring to FIGURE 2, there is a block diagram illustrating a telecommunications system 200 incorporating the apparatus 100. As illustrated, the telecommunications system 200 is configured as a wired communications network and the apparatus 100 is incorporated within a local carrier switch 228 (Class 5 switch) of the wired communications network. For clarity, certain details associated with the telecommunications system 200 are known in the industry and as such the descriptions provided below in relation to the telecommunications system 200 omits some components not necessary to understand the present invention.

In the examples described below, the calling party 214a and 214b uses either an alphanumerical phone 218a or a numerical phone 218b (land-based device including PDA, personal computer, wired phone...) to activate the alphanumeric speed dialing service with which they subscribe to in order to quickly call a called party 216a-216d without dialing the phone number of the called party 216a-216d.

In one example, the calling party 214a interacts with their alphanumerical phone 218a and enters an alphanumeric speed dialing code 212a (e.g., "BRAD"). The alphanumeric speed dialing code 212a (e.g., "BRAD") is sent to a local office switch 228 (Class 5 switch) which incorporates the apparatus 100. The controller 110 compares the received alphanumeric speed dialing code 212a (e.g., "BRAD") to the stored alphanumeric speed dialing codes 206a in table 204a and assuming there is a match then a connection could be established between the calling party 214a and a called party 216a (e.g., a person named BRAD) at the phone number 208a (e.g., 248-555-3867) associated with the received alphanumeric speed dialing code 212a (e.g., "BRAD").

If the phone number 208a (e.g., 248-555-3867) of the called party 216a is considered a local telephone call or a short-distance toll call, then the local office switch 228 can enable the connection between the calling party 214a and the called party 216a. Or, if the phone number 208a (e.g., 248-555-3867) of the called party 216a is considered a long distance telephone call, then the local office switch 228 can forward the call to a long distance switch 230 (Class 4 switch) which forwards the call to another local office switch 232 which connects the call to the called party 216a (e.g., Brad)(as shown). It should be understood that the local office switch 228 can enable the connection to the called party 216a (e.g., Brad) regardless of the final destination of the called party 216a (e.g., Brad). For instance, the called party 216a (e.g., Brad) may be using a mobile phone or other wireless device and still receive the call from the calling party 214a.

In the event the called party 216a (e.g., Brad) or any of the potential called parties listed on table 204a had changed their phone number after the calling party 214a created their calling list in table 206a, the alphanumeric speed dialing service of the present invention could automatically update table 204a to reflect the new phone number. For instance, the called party 216a (e.g., Brad) may have moved and changed their old phone number (e.g., 248-555-3867) to a new phone number (e.g., 810-555-0404). The apparatus 100 could then automatically update the database 102 to reflect the new phone number (e.g., 810-555-0404) of the called party 216a (e.g., Brad). At a later time, the apparatus 100 could inform the calling party 214a about the updated phone number (e.g., 810-555-0404) of the called party 216a (e.g., Brad). In any case, the calling party 214a only needs to recall the easy to remember alphanumeric speed dialing code 212a (e.g., "BRAD") to contact the called party 216a (e.g., Brad). This is a possible enhancement to the basic service of the present invention and is possible if the number change is made known to the service provider.

In another example, the calling party 214a interacts with their alphanumerical phone 218a and enters an alphanumeric speed dialing code 212b (e.g., "D"). The alphanumeric speed dialing code 212b (e.g., "D") is sent to the local office switch 228 (Class 5 switch) which incorporates the apparatus 100. The controller 110 compares the received alphanumeric speed dialing code 212b (e.g., "D") to the stored alphanumeric speed dialing codes 206a in table 204a and assuming there is a match then a connection could be established between the calling party 214a and a called party 216b (e.g., the father of calling party 214a) at the phone number 208a (e.g., 214-555-4958) associated with the received alphanumeric speed dialing code 212b (e.g., "D").

If the phone number 208a (e.g., 214-555-4958) of the called party 216b is considered a local telephone call or a short-distance toll call, then the local office switch 228 can enable the connection between the calling party 214a and the called party 216b (e.g., the father of the calling party 214a) (as shown). Or, if the phone number 208a (e.g., 214-555-4958) of the called party 216b (e.g., the father of calling party 214a) is considered a long distance telephone call, then the local office switch 228 can forward the call to the long distance switch 230 (Class 4 switch) which forwards the call to another local office switch 232 which connects the call to the called party 216b (e.g., the father of calling party 214a). Again, it should be understood that the local office switch 228 can enable the connection to the called party 216b (e.g., the father of calling party 214a) regardless of the final destination of the called party 216b (e.g., the father of calling party 214a). For instance, the called party 216b (e.g., the father of calling party 214a) may be using a mobile phone or other wireless device and still receive the call from the calling party 214a. This example can be taken one step further where the calling party 214a could reach a person such as their father by dialing "D" to dial their father's regular phone number, or by dialing "DM" to dial their father's mobile phone, or by dialing "DP" to dial their father's pager.

It should be noticed that the alphanumeric speed dialing service of the present invention makes it easy for the calling party 216a to remember the alphanumeric speed dialing codes 212a and 212b of the potential called parties 216a and 216b compared to the non-descriptive numerical codes (e.g., 1, 21) associated with the traditional numerical speed dialing service. Moreover, the alphanumeric speed dialing service of the present invention enables the calling party 216a to select a different number of alphanumeric characters (e.g., "M" for mom, "GB" for George Bush, "SCOTT" for Scott and "PIZZA" for the local pizzeria) to associate with the potential called parties. This enables the alphanumeric speed dialing service to let the calling party 214a store more entries in the database 102 so they can call more people as compared to the traditional numerical speed dialing service.

In yet another example, the calling party 214b interacts with their numerical phone 218b and enters an alphanumeric speed dialing code 212c (e.g., "534394"). The alphanumeric speed dialing code 212c (e.g., "534394") is received by a local office switch 228 (Class 5 switch) which incorporates the apparatus 100. Once received, the alphanumeric speed dialing code 112b (e.g., "534394") which includes one or more numerical characters (e.g., "534394") is translated by the controller 110 into alphanumerical characters which together form the alphanumeric speed dialing code 212c (e.g., "LIZ").

To perform the translation, the controller 110 can be programmed to interpret the numerical characters (e.g., "534394") in a manner where "53" is translated into an "L", "43" is translated into an "I" and "94" is translated in an "Z". In particular, the "53" is translated into an "L" because the "5" is the key number on the numerical phone 218b that has the alphanumerics "J, K and L" and the "3" is the location of "L" on that key. Likewise, the "43" is translated into an "I" because the "4" is the key number on the numerical phone 218b that has the alphanumerics "G, H and I" and the "3" is the location of "I" on that key. Lastly, the "94" is translated into an "Z" because the "9" is the key number on the numerical phone 218b that has the alphanumerics "W, X, Y and Z" and the "4" is the location of "Z" on that key. Using this scheme the calling party 214b that uses the numerical phone 218b can effectively input the easy to remember alphanumeric speed dialing code 212c of a particular called party 216c.

After determining the alphanumeric speed dialing code 212c (e.g., "LIZ"), the controller 110 then compares the translated alphanumeric speed dialing code 212c (e.g., "LIZ") to the stored alphanumeric speed dialing codes 206b in table 204b and assuming there is a match then a connection could be established between the calling party 214b and a called party 216c (e.g., Liz) at the phone number 208b (e.g., 469-555-8670) associated with the translated alphanumeric speed dialing code 212c (e.g., "LIZ").

If the phone number 208b (e.g., 469-555-8670) of the called party 216c (e.g., Liz) is considered a local telephone call or a short-distance toll call, then the local office switch 228 can enable the connection between the calling party 214b and the called party 216c (e.g., Liz). Or, if the phone number 208b (e.g., 469-555-8670) of the called party 216c (e.g., Liz) is considered a long distance telephone call, then the local office switch 228 can forward the call to the long distance switch 230 (Class 4 switch) which forwards the call to another local office switch 232 which connects the call to the called party 216c (e.g., Liz). Or, if the phone number (e.g., 469-555-8670) of the called party 216c (e.g., Liz) is considered a wireless telephone call, then the local office switch 228 can forward the call to the long distance switch 230 (Class 4 switch) which forwards the call to a wireless communications network 234 which connects the call to the called party 216c (e.g., Liz) (as shown).

In still yet another example, the calling party 214a interacts with the alphanumerical phone 218a and enters an alphanumeric speed dialing code 212d (e.g., "MOM1"). The alphanumeric speed dialing code 212d (e.g., "MOM1") is received by a local office switch 228 (Class 5 switch) which incorporates the apparatus 100. The controller 110 compares the received alphanumeric speed dialing code 212d (e.g., "MOM1") to the stored alphanumeric speed dialing codes 206a in table 204a and assuming there is a match then a connection between the calling party 214a and a called party 216d (e.g., mom at work) at the phone number 208a (e.g., 214-555-5760) associated with the received alphanumeric speed dialing code 212d (e.g., "MOM1"). Note that the alphanumeric speed dialing code 212d (e.g., "MOM1") in this example includes both letters and a numerical number.

If the phone number 208a (e.g., 214-555-5760) of the called party 216d (e.g., mom) is considered a local telephone call or a short-distance toll call, then the local office switch 228 can enable the connection between the calling party 214a and the called party 216d (as shown). Or, if the phone number 208a (e.g., 214-555-5760) of the called party 216d (e.g., mom) is considered a long distance telephone call, then the local office switch 228 can forward the call to a long distance switch 230 (Class 4 switch) which forwards the call to another local office switch 232 which connects the call to the called party 216d (e.g., mom). It should be understood that the local office switch 228 can enable the connection to the called party 216d (e.g., mom) regardless of the final destination of the called party 216d (e.g., mom). For instance, the called party 216d (e.g., mom) may be using a mobile phone or other wireless device and still receive the call from the calling party 214a.

It should be understood that the apparatus 100 which is shown incorporated with the local office switch 228 can be incorporated in many other components of the telecommunications system 200 including for example, the central office switch (e.g., long distance switch 230), a service control point (SCP) of an Intelligent Network (not shown), the alphanumerical phone 118a and the numerical phone 118b. In addition, the apparatus 100 can be installed within a home location register (HLR) of a wireless communications network so that it can provide the alphanumeric speed dialing service to calling parties that use wireless devices such as mobile phones.

It should also be understood that any of the capabilities of the alphanumeric speed dialing service described above in one of the examples can also be performed in other examples or situations. For instance, the calling parties 214a and 214b that subscribe to the alphanumeric speed dialing service need not update the phone numbers in tables 206a and 206b when one of the potentially called parties on their speed calling list changes their phone number since the alphanumeric speed dialing service can automatically update the phone numbers in tables 206a and 206b.

It should be further understood that the present invention can be expanded to include shared and/or public speed calling lists. For example, a calling party is allowed access to a shared speed calling list if he/she is a member of the shared speed calling list. For instance, to access the shared speed calling lists, a calling party using their own station may have to dial a feature access code (if necessary), followed by a shared speed call list identification number, followed by the speed calling code in the list. If the calling party is not using their own station, then the calling party could dial a remote feature access code and then follow the normal dialing sequence described above when they are using their own station.

It should be further understood that the present invention can at the end of a call, let the calling party request that the apparatus 100 and table 104a store a new destination number used in the last completed call. In this case, the calling party would provide a new speed calling code 106a to the table 104a upon completion of the call. In addition, the present invention can enable the calling party to override an existing code or assign a new destination address to an existing code. This would be beneficial if the called party's destination address changes or if the called party (e.g., boss, broker) changes.

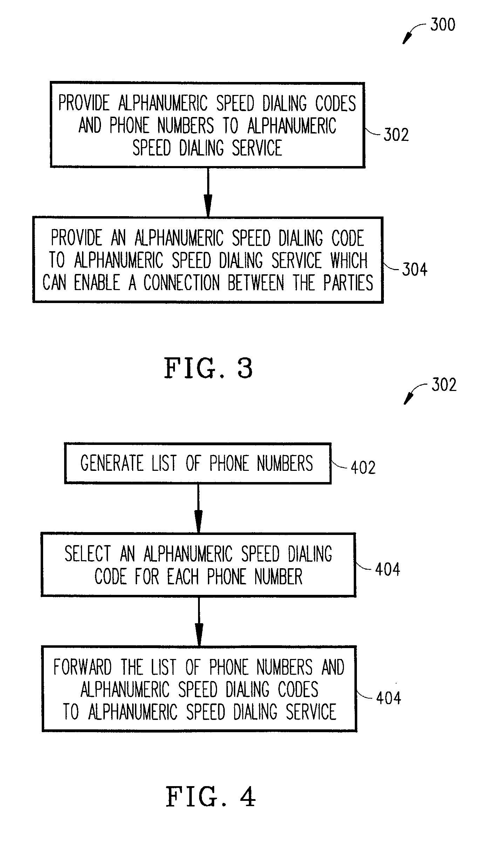

Referring to FIGURE 3, there is a flowchart illustrating the basic steps of the preferred method 300 for enabling a calling party to use an alphanumeric speed dialing service in accordance with the present invention. Beginning at step 302, the calling party 114a (only one described below) provides the alphanumeric speed dialing service with one or more alphanumeric speed dialing codes 106a and one or more phone numbers 108a which are related to potential called parties 116a and stored in database 102 (see FIGURE 1). The calling party 114a has a table 104a in the database 102 that associates the alphanumeric speed dialing codes 106a (e.g., "MOM") to the phone numbers 108a (e.g., 214-555-1235) of the called parties 116a. A more detailed description of the providing operation of step 302 is provided below with respect to FIGURE 4.

Referring to FIGURE 4, there is a flowchart illustrating in greater detail the providing operation of step 302. At step 402, the calling party 114a generates a list of phone numbers 108a they want to be able to call in the future using the alphanumeric speed dialing service of the present invention.

At step 404, the calling party 114a selects the alphanumeric speed dialing codes 106a that are associated with the generated list of phone numbers 108a (see table 104a in FIGURE 1). Typically, the alphanumeric speed dialing codes 106a are related to names of the potential called parties or otherwise descriptive of the potential called parties. For instance, the calling party 114a may select alphanumeric speed dialing codes 106a that have 1-5 characters such as "MOM1", "DAD", "BRAD", "PIZZA" and "HOLLY". Since the selected alphanumeric speed dialing codes 106a are descriptive of the potential called parties 116a it is easy for the calling party 114a to remember which button or series of buttons can be used to call a particular called party 116a. This is a marked improvement over the traditional speed dialing services in which the calling party had to remember which non-descriptive button or buttons (e.g., 1, 2, 21, 22) had to be used to call a particular called party.

At step 406, the calling party 114a forwards the phone numbers 108a and the alphanumeric speed dialing codes 106a to the alphanumeric speed dialing service. These phone numbers 108a and alphanumeric speed dialing codes 106a are stored in table 104a of the database 102 (see FIGURE 1). Typically, the calling party 114a can use their phone 118a to input the phone numbers 108a and alphanumeric speed dialing codes 106a and to submit this information to the alphanumeric speed dialing service. Alternatively, the calling party 114a can fill out a form containing this information and forward it to the operator of the alphanumeric speed dialing service. Moreover, the calling party 114a can interact with a web site associated with the alphanumeric speed dialing service to enter the phone numbers 108a and the alphanumeric speed dialing codes 106a.

Referring back to FIGURE 3, the calling party 114a can now use the alphanumeric speed dialing service to call a called party 116a without dialing their phone number. Basically at step 304, the calling party 114a provides the feature access code (if needed) and the alphanumeric speed dialing code 112a (e.g., "MOM") instead of a phone number 108a (e.g., 214-555-1235) of one of the potential called parties 116a (e.g., the mother of calling party 114) that the calling party 114a would like the alphanumeric speed dialing service to enable a connection therewith. Thereafter, the apparatus 100 can enable a connection between the calling party 114a and the called party 116a (e.g., the mother of calling party 114a).

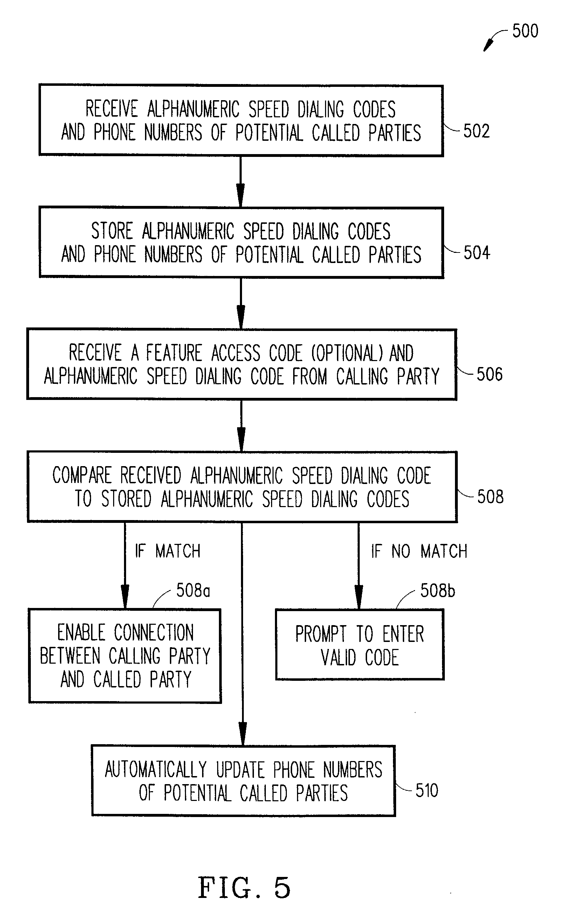

In the event, the apparatus 100 can not find a match between the received alphanumeric speed dialing code 112a and one of the stored alphanumeric speed dialing codes 106a, then the apparatus 100 can prompt the calling party 114a to enter a valid speed dialing code and if the speed dialing table 104a is empty then the calling party 114a can have the option to populate the speed calling table 104a. Alternatively if there is no match, the apparatus 100 can inform the calling party 114a that there is an error and in order to call the called party they should dial the entire number of the called party (assuming the apparatus 100 can distinguish between a speed dialing code and a full destination number). In addition, if there is no match, the apparatus 100 can inform the calling party 114a that it is possible to add the phone number of that particular called party and a newly created alphanumeric speed dialing code to the table 104a. Referring to FIGURE 5, there is a flowchart illustrating the basic steps of a preferred method 500 for providing an abbreviated alphanumeric speed dialing service to a calling party in accordance with the present invention. Beginning at steps 502 and 504, the apparatus 100 receives (step 502) from the calling party 114a (only one described) and stores (step 504) one or more alphanumeric speed dialing codes 106a and phone numbers 108a which are related to potential called parties 116a (see FIGURE 1). Again, the calling party 114a can use their phone 118a (or other mechanisms such as a web site) to input and submit the phone numbers 108a and the alphanumeric speed dialing codes 106a to the apparatus 100.

At step 506, the apparatus 100 receives a feature access code (if needed) and the alphanumeric speed dialing code 112a (e.g., "MOM) from the calling party 114a. The calling party 114a may use either the alphanumerical phone 118a or the numerical phone 118b (in which case the code is "616361" that is later translated to "MOM") to send the alphanumeric speed dialing code 112a to the apparatus 100. It is easy for the calling party 114a to remember the alphanumeric speed dialing code 112a (e.g, "MOM" or "616361") because the code is descriptive of the called party 116a (e.g., the mother of calling party 114a).

At step 508, the apparatus 100 compares the received alphanumeric speed dialing code 112a (e.g., "MOM") to the alphanumeric speed dialing codes 106a stored in the table 104a associated with the calling party 114a. If there is a match, then the apparatus 100 enables (step 508a) a connection between the calling party 114a and the called party 116a (e.g., the mother of calling party 114a) at the phone number 108a (e.g., 214-555-1235) associated with the received alphanumeric speed dialing code 112a (e.g., "MOM").

If there is no match, then the apparatus 100 prompts (step 508b) the calling party 114a to enter a valid speed dialing code and if the speed dialing table 104a is empty then the calling party 114a can have the option to populate the speed calling table 104a. Alternatively if there is no match, the apparatus 100 can inform the calling party 114a that there is an error and in order to call the called party they should dial the entire number of the called party (assuming the apparatus 100 can distinguish between a speed dialing code and a full destination number). In addition, if there is no match, the apparatus 100 can inform the calling party 114a that it is possible to add the phone number of that particular called party and a newly created alphanumeric speed dialing code to the table 104a. At step 510, the apparatus 100 can also automatically update the phone number 108 of one of the potential called parties 116a whenever there is a change to the stored phone number 108a. Basically, the apparatus 100 of the present invention could automatically update table 104a in database 102 to reflect the new phone numbers of potentially called parties 116a. For instance, the called party 116a (e.g., Bill) may have moved and changed their old phone number (e.g., 214-555-6235) to a new phone number (e.g., 698-555-4368). The apparatus 100 could then automatically update the database 102 to reflect the new phone number 108a (e.g., 698-555-4368) of the called party 116a (e.g., Bill). At a later time, the apparatus 100 could inform the calling party 114a about the updated phone number (e.g., 698-555-4368) of the called party 116a (e.g., Bill). In any case, the calling party 114a only needs to recall the easy to remember alphanumeric speed dialing code 112a (e.g., "BILL") to contact the called party 116a (e.g., Bill).

It should also be understood that the apparatus 100 of the present invention could also store URL's, email addresses or other like IP addresses against the speed calling codes of a potential called party provided such destination numbers can be translated by the network. This is another way the calling party could contact a potential call party using an alphanumeric speed dialing code.

From the foregoing, it can be readily appreciated by those skilled in the art that the present invention provides a telecommunications system, apparatus and method capable of providing an alphanumeric speed dialing service. As disclosed, the alphanumeric speed dialing service of the present invention can be an enhancement to the traditional numerical speed dialing service. In addition, the alphanumeric speed dialing service can be a telephone-based service (e.g., apparatus 100 incorporated within phone 118a or 118b) or a network-based service (as described above).

Although one embodiment of the present invention has been illustrated in the accompanying Drawings and described in the foregoing Detailed Description, it should be understood that the invention is not limited to the embodiment disclosed, but is capable of numerous rearrangements, modifications and substitutions without departing from the spirit of the invention as set forth and defined by the following claims.

## Claims

1. An apparatus capable of providing an alphanumeric speed dialing service, said apparatus comprising:
a database including a table of stored alphanumeric speed dialing codes and stored phone numbers; and
a controller, coupled to said database, capable of receiving an alphanumeric speed dialing code from a calling party and further capable of comparing the received alphanumeric speed dialing code to the stored alphanumeric speed dialing codes and if there is a match then enabling a connection between the calling party and a called party at the stored phone number associated with the received alphanumeric speed dialing code.

2. The apparatus of Claim 1, wherein each stored alphanumeric speed dialing code is related to a name of a potential called party.

3. The apparatus of Claim 1, wherein said received alphanumeric speed dialing code includes at least one letter which is related to a name of the called party.

4. The apparatus of Claim 1, wherein said received alphanumeric speed dialing code includes at least one numerical character that is translated by said controller into an alphanumeric speed dialing code which is related to a name of the called party.

5. The apparatus of Claim 1, wherein said controller is also capable of receiving a feature access code which activates the alphanumeric speed dialing service along with the alphanumeric speed dialing code.

6. The apparatus of Claim 1, wherein said controller is also capable of changing one of the stored phone numbers of a potential called party when the potential called party is issued a new phone number.

7. The apparatus of Claim 1, wherein said alphanumeric speed dialing service is an enhancement to a numerical speed dialing service.

8. The apparatus of Claim 1, wherein said apparatus is incorporated within a telephone.

9. The apparatus of Claim 1, wherein said apparatus is incorporated within a switch.

10. The apparatus of Claim 1, wherein said apparatus is incorporated within a home location register.

11. The apparatus of Claim 1, wherein said apparatus is incorporated within a service control point.

12. The apparatus of Claim 1, wherein said calling party uses an alphanumerical phone to generate the alphanumeric speed dialing code.

13. The apparatus of Claim 1, wherein said calling party uses a numerical phone to generate the alphanumeric speed dialing code.

14. A method for enabling a calling party to use an alphanumeric speed dialing service, said method comprising the steps of:
providing the alphanumeric speed dialing service with a plurality of alphanumeric speed dialing codes and a plurality of phone numbers which are associated with potential called parties; and
providing the alphanumeric speed dialing service with an alphanumeric speed dialing code instead of a phone number of one of the potential called parties that the calling party would like said alphanumeric speed dialing service to enable a connection therewith.

15. The method of Claim 14, wherein said step of providing the alphanumeric speed dialing service with a plurality of alphanumeric speed dialing codes and a plurality of phone numbers further includes the steps of:
generating a list of the phone numbers of the potential called parties that are to be associated with alphanumeric speed dialing codes;
selecting the alphanumeric speed dialing codes that are descriptive of the potential called parties; and
forwarding the phone numbers and the alphanumeric speed dialing codes of the potential called parties to the alphanumeric speed dialing service.

16. The method of Claim 14, wherein said step of providing the alphanumeric speed dialing service with an alphanumeric speed dialing code further includes the step providing a feature access code along with the alphanumeric speed dialing code to initiate the alphanumeric speed dialing service.

17. The method of Claim 14, wherein said provided alphanumeric speed dialing code includes at least one alphanumerical character which is related to a name of the one called party.

18. The method of Claim 14, wherein said provided alphanumeric speed dialing code includes at least one numerical character that is translated into an alphanumeric speed dialing code which is related to a name of the one called party.

19. The method of Claim 14, wherein said alphanumeric speed dialing service can automatically update the phone numbers of the potential called parties.

20. A method for providing an abbreviated alphanumeric speed dialing service to a calling party, said method comprising the steps of:
receiving, from the calling party, a plurality of alphanumeric speed dialing codes and a plurality of phone numbers of potential called parties;
storing the plurality of alphanumeric speed dialing codes and the plurality of phone numbers of the potential called parties;
receiving an alphanumeric speed dialing code from the calling party;
comparing the received alphanumeric speed dialing code to the stored alphanumeric speed dialing codes; and
if there is a match between the received alphanumeric speed dialing code and one of the stored alphanumeric speed dialing codes, enabling a connection between the calling party and a called party at the stored phone number associated with the received alphanumeric speed dialing code.

21. The method of Claim 20, further comprising the step of changing one of the stored phone numbers of a potential called party when the potential called party is issued a new phone number.

22. The method of Claim 20, wherein said step of receiving an alphanumeric speed dialing code from the calling party further includes receiving a feature access code which activates the alphanumeric speed dialing service.

23. The method of Claim 20, wherein said received alphanumeric speed dialing code includes at least one letter which is related to a name of the called party.

24. The method of Claim 20, wherein said received alphanumeric speed dialing code includes at least one numerical character that is translated into an alphanumeric speed dialing code which is related to a name of the called party.

25. The method of Claim 20, wherein said received and stored alphanumeric speed dialing codes are related to the names of the potential called parties.

26. The method of Claim 20, wherein said alphanumeric speed dialing service is an enhancement to a numerical speed dialing service.

27. The method of Claim 20, wherein said alphanumeric speed dialing service is a telephone based service.

28. The method of Claim 20, wherein said alphanumeric speed dialing service is a network based service.

29. A telecommunications system comprising:
an apparatus capable of providing an alphanumeric speed dialing service, said apparatus including:
a database including a table of stored alphanumeric speed dialing codes and stored phone numbers; and a controller, coupled to said database, capable of receiving an alphanumeric speed dialing code from a calling party and further capable of comparing the received alphanumeric speed dialing code to the stored alphanumeric speed dialing codes and if there is a match then enabling a connection between the calling party and a called party at the stored phone number associated with the received alphanumeric speed dialing code.

30. The telecommunications system of Claim 29, wherein said apparatus is also capable of providing an numerical speed dialing service, wherein said database includes a table of stored numerical speed dialing codes and stored phone numbers and said controller is capable of receiving a numerical speed dialing code from a calling party and further capable of comparing the received numerical speed dialing code to the stored numerical speed dialing codes and if there is a match then enabling a connection between the calling party and a called party at the phone number associated with the received numerical speed dialing code.

31. The telecommunications system of Claim 29, wherein said received alphanumeric speed dialing code is related to a name of the called party.

32. The telecommunications system of Claim 29, wherein said calling party provides one feature access code along with the alphanumeric speed dialing code to initiate the alphanumeric speed dialing service and said calling party provides another feature access code along with the numerical speed dialing code to initiate the numerical speed dialing service.

33. The telecommunications system of Claim 29, wherein said apparatus is a telephone, switch, home location register or a service control point.
